# FASCICULE DE BREVET EUROPEEN

(11) **EP 2 340 238 B1**
(45) Date de publication et mention de la délivrance du brevet: **18.04.2018**
(21) Numéro de dépôt: 09747903.4
(22) Date de dépôt: 23.09.2009
(51) Int. Cl.: C04B 35/80

(54) **PROCEDE DE FABRICATION DE PIECES EN MATERIAU COMPOSITE THERMOSTRUCTURAL.**
HERSTELLUNGSVERFAHREN VON TEILEN AUS EINEM & xA; WÄRMESTRUKTURIERTEN VERBUNDWERKSTOFF
METHOD OF MANUFACTURING PIECES OF THERMOSTRUCTURAL COMPOSITE MATERIAL

(30) Priorité: 29.09.2008 FR 0856530
(43) Date de publication de la demande: 06.07.2011
(73) Titulaire: Safran Ceramics, 33185 Le Haillan (FR)
(72) Inventeur: EBERLING-FUX, Nicolas, F-33400 Talence (FR); BOUILLON, Eric, F-33185 Le Haillan (FR); PHILIPPE, Eric, F-33700 Merignac (FR); TAWIL, Henri, F-33110 Le Bouscat (FR)
(74) Mandataire: Laïk, Eric
(86) Numéro de dépôt international: PCT/FR2009/051804
(87) Numéro de publication internationale: WO 2010/034937

(56) Documents cités:
- EP-A- 0 626 360
- EP-A- 0 634 378
- EP-A- 1 227 071
- WO-A-92/19567
- FR-A- 2 778 655
- US-A- 5 733 655
- US-A1- 2003 162 647

## Description

### Arrière-plan de l'invention

L'invention concerne la fabrication de pièces en matériau composite thermostructural, notamment de pièces destinées à être utilisées dans le domaine aéronautique ou le domaine spatial. Des exemples de telles pièces sont des éléments d'arrière-corps de moteurs aéronautiques à turbine à gaz, tels que des mélangeurs ou tuyères secondaires de moteurs à flux multiples ou des corps centraux ou "plugs".

Les matériaux composites thermostructuraux sont remarquables par leurs propriétés mécaniques, qui les rendent aptes à constituer des pièces structurales, et par leur capacité à conserver ces propriétés à des températures élevées. Des matériaux composites thermostructuraux bien connus sont les composites carbone/ carbone (C/C), comprenant un renfort en fibres de carbone et une matrice en carbone, et les composites à matrice céramique (CMC) comprenant un renfort en fibres réfractaires (carbone ou céramique) et une matrice en céramique. Les CMC présentent non seulement une très bonne mécanique à température élevée, mais aussi une bonne tenue en milieu corrosif (présence d'oxydants et d'humidité). Leur utilisation a donc déjà été proposée pour des éléments d'arrière-corps de moteurs aéronautiques qui rencontrent en service des températures généralement de 400°C à 750°C.

Un processus connu de fabrication d'une pièce en matériau composite thermostructural comprend les étapes suivantes :
- réalisation d'une préforme fibreuse en fils (ou câbles) de carbone ou de céramique imprégnée par une composition consolidante contenant un précurseur de carbone ou de céramique, généralement une résine diluée ou non dans un solvant,
- transformation du précurseur en carbone ou céramique par pyrolyse et, ensuite,
- densification de la préforme par infiltration chimique en phase gazeuse ou CVI ("Chemical Vapour Infiltration").

Pour la réalisation de la préforme fibreuse imprégnée, on utilise une ou plusieurs strates d'une texture fibreuse, par exemple un tissu tridimensionnel (3D), imprégnée par la composition consolidante et on met en forme la texture fibreuse, par exemple par drapage sur un outillage de conformation, afin d'obtenir une préforme ayant une forme correspondant à celle de la pièce à fabriquer. La résine de la composition consolidante est réticulée puis pyrolysée laissant un résidu solide en carbone ou céramique assurant la consolidation de la préforme. La préforme consolidée est densifiée par une matrice carbone ou céramique obtenue par CVI. De façon bien connue, la densification par CVI est obtenue en plaçant la préforme consolidée dans une chambre de réaction et en introduisant dans la chambre une phase gazeuse réactionnelle contenant un ou plusieurs précurseurs de carbone ou de céramique, les conditions notamment de pression et de température dans la chambre de réaction étant choisies pour permettre à la phase gazeuse réactionnelle de diffuser au sein de la porosité de la préforme et d'y former un dépôt solide de carbone ou de céramique par décomposition d'un ou plusieurs constituants de la phase gazeuse réactionnelle ou réaction entre plusieurs constituants.

L'imprégnation par la composition consolidante doit être réalisée de façon suffisante pour obtenir la quantité de résidu solide après pyrolyse nécessaire à une consolidation satisfaisante. Par consolidation satisfaisante, on entend ici une densification partielle de la préforme fibreuse qui atteint ou dépasse légèrement un seuil à partir duquel la préforme conserve seule sa forme et peut éventuellement être manipulée sans nécessiter d'outillage de maintien. La déposante a constaté qu'une consolidation suffisante est généralement obtenue avec un taux volumique de résidu solide après pyrolyse de 12% à 14% (c'est-à-dire le pourcentage du volume apparent de la préforme occupé par ce résidu solide).

Des essais mécaniques effectués sur des pièces en CMC ainsi obtenues par consolidation par voie liquide avec une résine précurseur de céramique et densification par CVI ont abouti à des résultats satisfaisants d'un point de vue thermomécanique mais qu'il peut être souhaitable d'améliorer concernant le module de Young du matériau. La déposante a constaté qu'en raison de la quantité de composition consolidante requise, une grande partie des espaces intra-fils est occupée par le résidu solide de pyrolyse qui confère des propriétés mécaniques moindres que celles apportées par la matrice céramique obtenue par CVI.

### Objet et résumé de l'invention

L'invention a pour but de proposer un procédé de fabrication de pièces en un matériau composite thermostructural ayant un potentiel mécanique fortement augmenté, tout en associant une consolidation par voie liquide et une densification par CVI.

Ce but est atteint grâce à un procédé comprenant la réalisation d'une préforme fibreuse formée de fils ou câbles, la consolidation de la préforme fibreuse dans sa forme, et ensuite, la densification par infiltration chimique en phase gazeuse de la préforme fibreuse consolidée, la consolidation étant réalisée par imprégnation des fils ou câbles de la préforme fibreuse par une composition consolidante contenant un précurseur de carbone ou céramique et par transformation du précurseur en carbone ou céramique par pyrolyse, procédé dans lequel on utilise une composition consolidante qui contient en outre des charges solides réfractaires sous forme de poudre de granulométrie moyenne inférieure à 200 nanomètres et qui laisse, après pyrolyse, une phase solide consolidante dans laquelle le carbone ou la céramique issu du précurseur occupe un volume représentant entre 3% et 10% du volume apparent de la préforme et les charges solides occupent un volume représentant entre 0,5% et 5% du volume apparent de la préforme.

La présence des charges submicrométriques dans la composition liquide consolidante apporte les avantages suivants :
- la composition consolidante a moins tendance à pénétrer dans les espaces intra-fils ou intra-câbles à faible porosité, ce qui libère une partie importante de ces espaces pour la densification par CVI et permet, au niveau de chaque fil ou câble, la réalisation d'un "mini composite" à propriétés mécaniques élevées ;
- le résidu solide de pyrolyse est renforcé par la présence des charges, ce qui accroît ses propriétés mécaniques et sa capacité de consolidation.

Par conséquent, en comparaison avec l'état de la technique exposé plus haut, une moindre quantité de précurseur de carbone ou de céramique dans la composition consolidante suffit pour assurer une consolidation satisfaisante, et le taux volumique dans la préforme de résidu solide de pyrolyse de la phase consolidante peut être diminué pour être compris entre 3% et 10%, de préférence entre 3% et 6%.

La quantité de charges solides dans la composition consolidante ne doit pas être excessive pour éviter une augmentation de la viscosité ou l'utilisation de grande quantité de solvant pouvant poser des problèmes de mise en oeuvre et d'environnement. Le taux volumique dans la préforme de charges solides de la phase consolidante est donc compris entre 0,5% et 5%, de préférence entre 0,5% et 3%.

La granulométrie des charges solides est choisie suffisamment faible pour éviter qu'à la mise en place de la composition consolidante se produise un phénomène de filtration avec les charges solides s'agglomérant à la périphérie des fils ou câbles et le précurseur liquide de carbone ou céramique pénétrant seul dans les fils ou câbles. Aussi, cette granulométrie est en moyenne inférieure à 200 nanomètres, voire inférieure à 100 nanomètres.

Selon une particularité du procédé, la préforme fibreuse est réalisée par conformation de texture fibreuse imprégnée par la composition consolidante. Lorsque le précurseur de carbone ou céramique dans la composition consolidante est une résine, la conformation de la texture fibreuse est avantageusement réalisée après une pré-réticulation de la résine.

Selon une autre particularité du procédé, une couche d'interphase est formée par infiltration chimique en phase gazeuse sur les fibres des fils ou câbles avant imprégnation par la composition consolidante.

Selon encore une autre particularité du procédé, une première couche d'interphase est formée par infiltration chimique en phase gazeuse sur les fibres des fils ou câbles avant imprégnation par la composition consolidante et une deuxième couche d'interphase est formée après consolidation de la préforme fibreuse et avant densification de la préforme fibreuse consolidée.

### Brève description des dessins

D'autres particularités et avantages de l'invention ressortiront à la lecture de la description faite ci-après, à titre indicatif mais non limitatif, en référence aux dessins annexés sur lesquels :
- la figure 1 montre des étapes successives d'un procédé de fabrication d'une pièce en matériau composite thermostructural selon un mode de mise en oeuvre de l'invention ;
- la figure 2 est une vue très schématique en demi-coupe axiale montrant la conformation d'une préforme fibreuse pour la fabrication d'un élément de tuyère de moteur aéronautique ;
- la figure 3 montre des étapes successives d'un procédé de fabrication d'une pièce en matériau composite thermostructural selon un autre mode de mise en oeuvre de l'invention ;
- la figure 4 présente des clichés optiques en bord et à coeur d'un échantillon en matériau CMC obtenu par un procédé selon l'invention ; et
- la figure 5 présente des clichés optiques à coeur d'un échantillon en matériau CMC obtenu par un procédé selon l'art antérieur.

### Description détaillée de modes de réalisation

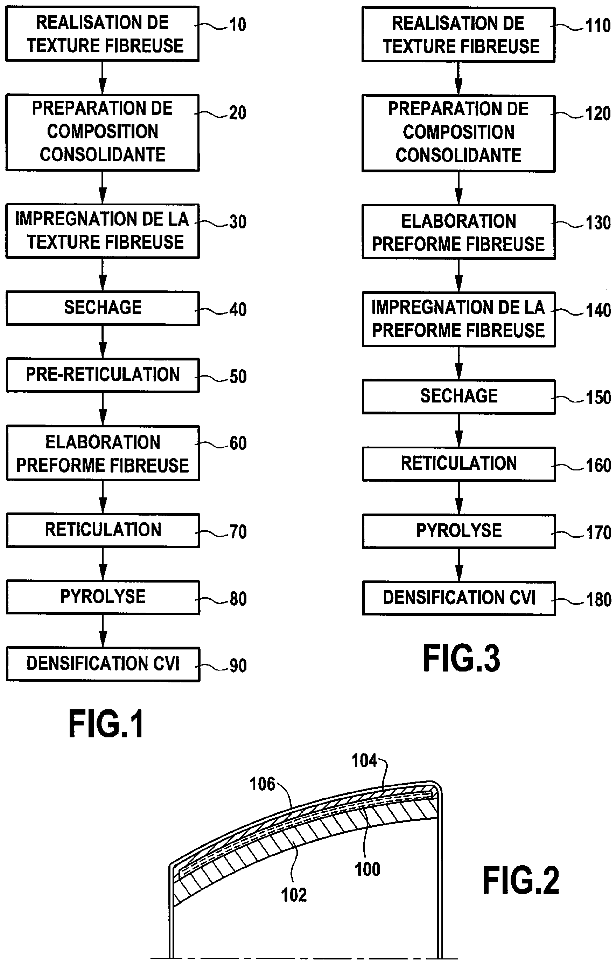

Un mode de réalisation d'un procédé selon l'invention sera décrit ci-après en référence à la figure 1 dans le cadre de la fabrication d'une pièce en matériau composite thermostructural de type CMC.

Une étape 10 du procédé consiste à réaliser une texture fibreuse en fibres de carbone ou céramique à partir de laquelle une préforme d'une pièce à fabriquer peut être élaborée.

La texture fibreuse est formée à partir de fils ou câbles (ci-après désignés par "fils") en fibres de carbone ou céramique ou en fibres de précurseur de carbone ou céramique, la transformation du précurseur en carbone ou céramique étant alors réalisée par traitement thermique après formation de la texture fibreuse.

La texture fibreuse peut être sous forme d'un tissu, notamment un tissu obtenu par tissage tridimensionnel (3D), ce qui permet d'avoir une épaisseur de texture fibreuse relativement importante avec plusieurs couches de fils liées entre elles.

D'autres processus textiles peuvent être utilisés pour former la texture fibreuse, comme par exemple le tressage, le tricotage ou la formation de nappes multidirectionnelles par superposition dans des directions différentes et liaison entre elles de nappes de fils unidirectionnelles, la liaison étant par exemple réalisée par couture.

Une autre étape 20 du procédé consiste à préparer une composition consolidante sous forme liquide, comprenant un précurseur de céramique, typiquement une résine, et des charges solides sous forme de poudre(s) de céramique. La composition consolidante peut contenir aussi un dispersant pour les charges solides, un solvant pour la résine et un solvant pour le dispersant (si un solvant commun n'est pas disponible), la quantité de solvant(s) étant ajustée pour conférer à la composition la viscosité adaptée pour imprégnation de la texture fibreuse.

Des précurseurs de céramique notamment sous forme de résine sont bien connus. Ainsi, une résine précurseur de carbure de silicium SiC peut être choisie parmi des résines polysiloxanes, des résines polysilazanes et des résines polycarbosilanes.

Les charges solides sont constituées par une ou plusieurs poudres de céramique choisies(s) par exemple parmi les poudres de carbure de silicium SiC, carbure de titane TiC, carbure de bore B₄C et nitrure de bore BN. Selon une caractéristique du procédé, la granulométrie est choisie relativement faible, en moyenne inférieure à 200 nanomètres, voire de préférence inférieure à 100 nanomètres selon les granulométries disponibles pour les poudres de céramique choisies.

Par granulométrie, on entend ici la dimension ou diamètre moyen des grains de poudre.

A l'étape 30, la texture fibreuse est imprégnée par la composition consolidante. Les taux respectifs de précurseur de céramique et de poudre(s) de céramique dans la composition consolidante ainsi que la quantité de composition consolidante introduite dans la texture sont choisis afin que dans la préforme fibreuse et après transformation du précurseur en un résidu céramique solide :
- le taux volumique de résidu céramique dans la préforme est compris entre 3% et 10%, de préférence entre 3% et 6%, et
- le taux volumique de poudre(s) de céramique dans la préforme est compris entre 0,5% et 5%, de préférence entre 0,5% et 3%.

Par taux volumique, on entend ici la fraction occupée du volume total apparent de la préforme.

L'imprégnation de la texture fibreuse peut être réalisée par application au pinceau ou par épandage ou par immersion dans un bain, éventuellement sous vide, ou encore par injection de la composition consolidante avec mise sous vide.

Connaissant le volume apparent de la préforme consolidée à obtenir et le taux de résidu solide de pyrolyse pour le précurseur de céramique utilisé, on peut aisément déterminer la quantité de précurseur à utiliser pour obtenir un taux volumique de résidu céramique désiré dans la préforme. Connaissant le volume apparent de la préforme consolidée à obtenir, on peut également aisément déterminer la quantité de poudre(s) de céramique à utiliser pour obtenir un taux volumique de poudre(s) de céramique désiré dans la préforme. Connaissant les quantités de précurseur céramique et de poudre(s) de céramique à utiliser, les quantités de dispersant éventuel et de solvant(s) peuvent être aisément déterminées pour assurer une bonne dispersion de la ou des poudres et pour conférer à la composition consolidante la viscosité adaptée pour l'imprégnation de la texture fibreuse.

Après imprégnation, une étape 40 de séchage peut être réalisée (élimination de solvants éventuels) suivie par une étape 50 de pré-réticulation de la résine précurseur de céramique. Par pré-réticulation de la résine on entend amener la résine à un état intermédiaire entre résine non réticulée et réticulation achevée. L'objet est de conférer à la texture fibreuse une plus grande raideur tout en conservant la déformabilité requise pour pouvoir la conformer afin de réaliser la préforme de la pièce à fabriquer. On peut ainsi conférer à la texture fibreuse une capacité améliorée à conserver sa forme après déformation lors de sa conformation et faciliter la mise en place éventuelle de liaisons discrètes (couture, implantation d'éléments de liaison), étant noté qu'une telle pré-réticulation peut ne pas être utile dans tous les cas.

L'élaboration de la préforme fibreuse de la pièce à fabriquer (étape 60) peut comprendre la découpe de strates ou panneaux dans la texture fibreuse imprégnée et leur mise en forme sur un élément d'outillage ayant une forme correspondant à celle de la pièce à fabriquer. On notera que l'imprégnation de la texture fibreuse peut être réalisée après découpe de tels strates ou panneaux.

Selon la complexité de la forme à donner à la préforme fibreuse, la capacité de déformation de la texture fibreuse sans engendrer d'irrégularités significatives en surface et l'épaisseur de la préforme fibreuse, l'élaboration de celle-ci pourra comprendre une ou plusieurs des opérations suivantes :
- drapage (mise en forme) d'une strate de texture fibreuse sur l'élément d'outillage,
- drapage de plusieurs strates superposées, non nécessairement de mêmes dimensions lorsque la préforme fibreuse a une épaisseur évolutive (variable),
- découpe de panneaux de texture fibreuse et disposition des panneaux sur l'élément d'outillage avec bords adjacents, éventuellement avec recouvrement mutuel des bords.

La liaison entre strates superposées ou entre bords adjacents de panneaux de texture fibreuse peut être réalisée par couture ou implantation d'éléments de liaison tels que des fils.

Le maintien de la préforme fibreuse dans la forme voulue sur l'élément d'outillage de conformation peut être réalisé au moyen d'une membrane par exemple en élastomère formant contre-moule et appliquée sur la surface externe de la préforme.

La figure 2 montre une préforme fibreuse 100 par exemple destinée à la fabrication d'un élément aval de tuyère secondaire en CMC pour un moteur aéronautique à turbine à gaz double flux. La préforme 100 est élaborée par drapage d'une ou plusieurs strates de texture fibreuse sur un mandrin 102 et est maintenue dans la forme voulue au moyen d'une membrane 104 en élastomère.

Des préformes fibreuses de forme plus complexe impliquant des opérations de drapage et liaison de strates et panneaux découpés peuvent être élaborées comme décrit par exemple dans la demande de brevet PCT/FR2008/050207 pour un mélangeur à lobes d'un moteur aéronautique à turbine à gaz double flux.

Après élaboration de la texture fibreuse, la réticulation de la résine précurseur de céramique est achevée (étape 70).

La préforme fibreuse peut alors être retirée de l'outillage de conformation pour être soumise à un traitement thermique de pyrolyse de la résine (étape 80). Un tel traitement thermique est usuellement réalisé à une température de 700°C à 1000°C, par exemple environ 900°C, pendant une à plusieurs heures.

On obtient alors une préforme fibreuse consolidée par le résidu céramique de pyrolyse du précurseur contenu dans la composition consolidante, ce résidu céramique étant lui-même renforcé par la ou les poudres de céramique.

La préforme fibreuse ainsi consolidée est ensuite densifiée par une matrice céramique en CVI (étape 90). Les processus CVI de densification d'un substrat poreux par une matrice céramique sont bien connus. Avantageusement, la densification est réalisée par une matrice céramique au moins en partie auto-cicatrisante, c'est-à-dire capable, par passage à un état pâteux aux températures d'utilisation, de colmater des fissures éventuelles de la matrice. Des procédés de formation de matrices céramiques notamment auto-cicatrisantes sont décrits par exemple dans les documents US 5 965 266, US 6 068 930 et US 6 291 058.

On notera que si une poudre de B₄C est présente dans les charges solides de la composition consolidante, cette poudre peut contribuer à la fonction d'auto-cicatrisation par formation de verre en présence d'oxygène.

La densification CVI étant réalisée à une température supérieure à celle de pyrolyse du précurseur de céramique de la composition consolidante, les étapes 80 et 90 peuvent être enchaînées dans un même four, la pyrolyse étant réalisée lors de la montée en température préalable au début de la densification CVI.

Comme déjà indiqué, le procédé selon l'invention est remarquable en ce que, par rapport aux processus de consolidation voie liquide connus, une consolidation efficace peut être obtenue avec :
- une moindre quantité de précurseur de céramique dans la composition consolidante,
- un plus grand volume disponible à l'intérieur des fils pour la matrice céramique obtenue par CVI.

Cela résulte de la présence dans la composition consolidante de charges solides sous forme de poudre céramique de relativement faible granulométrie, lesquelles charges :
- assurent une fonction de renforcement du résidu céramique de précurseur contenu dans la composition consolidante et améliorent ainsi la capacité de consolidation, et
- font que la composition consolidante et notamment le précurseur de céramique qu'elle contient pénètre plus difficilement dans les espaces vides intra-fils (volumes internes des fils) ; il est toutefois nécessaire à cet effet que la granulométrie des charges solides soit relativement faible, comme indiqué plus haut pour éviter un effet de filtration de la composition consolidante par les fils.

Un autre mode de réalisation d'un procédé selon l'invention est illustré par la figure 3, cet autre mode de réalisation se distinguant de celui de la figure 1 en ce que l'imprégnation de la texture fibreuse est réalisée après élaboration de la préforme.

On retrouve des étapes 110 et 120 de réalisation de texture fibreuse et de préparation de composition consolidante analogues aux étapes 10 et 20 du procédé de la figure 1.

A l'étape 130, la préforme fibreuse est élaborée à partir de strates et/ou panneaux de texture fibreuse sèche, de façon similaire à ce qui est décrit plus haut en relation avec l'étape 60 du procédé de la figure 1.

A l'étape 140, la préforme fibreuse est imprégnée par la composition consolidante. L'imprégnation peut être réalisée au pinceau ou par épandage ou par immersion dans un bain, éventuellement sous vide, ou encore par injection de la composition consolidante avec mise sous vide. Dans ce dernier cas, comme montré par la figure 2, l'ensemble formé par la préforme 100, le mandrin 102 et la membrane 104 peut être disposé dans une enveloppe 106. La composition consolidante est injectée tandis que le volume interne de l'enveloppe 106 est relié à une source de vide. Selon le degré de déformabilité de la membrane 104, une compression de la préforme fibreuse peut être simultanément réalisée, afin d'augmenter le taux volumique de fibres dans la préforme.

Après séchage éventuel (étape 150) et réticulation de la résine précurseur de céramique contenue dans la composition consolidante (étape 160), la préforme fibreuse peut être retirée de l'outillage de conformation avant les étapes 170 et 180 de pyrolyse et densification CVI similaires aux étapes 80 et 90 du procédé de la figure 1.

Dans ce qui précède, la fabrication des pièces en CMC a été envisagée.

Le procédé selon l'invention peut aussi être utilisé pour la fabrication de pièces en composite C/C. Dans ce cas, on réalise une texture fibreuse en fibres de carbone et la composition consolidante contient un précurseur de carbone sous forme liquide, typiquement une résine éventuellement diluée dans un solvant, et des charges solides de préférence sous forme de poudre de carbone, par exemple des charges diamant ou du noir de carbone, étant noté que des charges solides sous forme de poudre(s) de céramique pourraient éventuellement être utilisées. La composition consolidante peut aussi comporter un dispersant pour la poudre de carbone et éventuellement un solvant de ce dispersant.

Des résines précurseurs de carbone sont bien connues. On pourra par exemple utiliser une résine choisie parmi des résines époxydes, furaniques ou phénoliques. Un brai peut aussi être utilisé à titre de précurseur de carbone.

Comme précédemment, les charges solides ont une granulométrie moyenne inférieure à 200 nanomètres, de préférence inférieure à 100 nanomètres. En outre, les quantités de précurseur de carbone et charges solides dans la composition consolidante sont aussi choisies pour qu'après pyrolyse du précurseur de carbone le taux volumique de résidu solide de pyrolyse de ce précurseur dans la préforme fibreuse consolidée soit compris entre 3% et 10%, de préférence entre 3% et 6% et le taux volumique de charges solides dans la préforme soit compris entre 0,5% et 5%, de préférence entre 0,5% et 3%.

Une interphase peut être prévue entre les fibres de la texture fibreuse et la matrice du matériau CMC ou C/C. Comme connu en soi, dans un matériau CMC, une telle interphase peut avoir une fonction de défragilisation en étant en un matériau capable d'assurer une relaxation de contraintes au fond de fissures qui parviennent à l'interphase à travers la matrice et d'éviter ou retarder une propagation des fissures à travers les fibres avec rupture de celles-ci. Le matériau constitutif de l'interphase est par exemple du carbone pyrolytique (PyC), du nitrure de bore (BN) ou du carbone dopé au bore (BC avec par exemple 5% à 20% At de B, le complément étant C). Dans un matériau composite C/C, une interphase peut être utile pour améliorer la tenue à l'oxydation, notamment lorsque l'interphase contient du bore, telle que BN ou BC.

Avantageusement, l'interphase est formée d'une première couche d'épaisseur réduite, par exemple comprise entre 10 nanomètres (nm) et 100 nm, voire entre 10 nm et 50 nm, déposée par CVI sur les fibres de la texture fibreuse, avant imprégnation par la composition consolidante, et d'une deuxième couche ayant par exemple une épaisseur d'au moins 100 nm, déposée après pyrolyse du précurseur de céramique ou de carbone de la composition consolidante et avant densification. La faible épaisseur de la première couche d'interphase permet de conserver une capacité suffisante de déformation de la texture fibreuse pour obtenir une préforme fibreuse de la forme désirée. La deuxième couche d'interphase recouvre les fibres de la préforme fibreuse et les grains de résidu de la composition consolidante après pyrolyse. Les deux couches d'interphase ne sont pas nécessairement formées du même matériau. Les étapes de pyrolyse, formation de la deuxième couche d'interphase et densification CVI peuvent être enchaînées dans un même four.

Une telle réalisation d'une interphase en deux couches est décrite dans la demande de brevet français de la déposante déposée le 21 juillet 2008 sous le numéro 0854937.

Des exemples de mise en oeuvre d'un procédé selon l'invention seront maintenant décrits.

### Exemple 1 (évaluation du niveau de consolidation)

Des textures fibreuses en fibres C ont été réalisées par tissage 3D multicouches de fils en fibres de C fournis par la société japonaise Tenax sous l'appellation "Fibres HTS mèchées NM5". Les tissus C obtenus avaient une épaisseur de 4 mm environ. Ils ont été traités thermiquement sous vide à une température d'environ 1 600°C pendant environ 30 min.

Une première couche d'interphase en PyC ayant une épaisseur environ égale à 30 nm a été déposée par CVI sur les fibres de la texture fibreuse, en utilisant une phase gazeuse réactionnelle contenant du méthane.

Des compositions consolidantes ont été réalisées contenant un précurseur de SiC sous forme d'une résine polysiloxane fournie par la société allemande Wacker Chemie sous la référence "MK" et de la poudre de B₄C de granulométrie moyenne de 150 nm environ, ou de la poudre de SiC de granulométrie moyenne de 50 nm environ, en procédant de la façon suivante :
- dispersion de la poudre de B₄C ou de la poudre de SiC dans un mélange d'un dispersant constitué de polyéthylène imine et d'un solvant de ce dispersant (éthanol),
- ajout d'un solvant de la résine polysiloxane, en l'espèce du méthyl éthyl cétone (MEC),
- ajout de la résine polysiloxane.

Différentes compositions consolidantes ont été réalisées avec des quantités de résine polysiloxane et de poudre de B₄C ou de SiC telles que, après formation de préformes fibreuses et pyrolyse, les taux volumiques dans les préformes consolidées de SiC issu de la résine précurseur et de poudre de B₄C ou SiC sont tels qu'indiqués dans le tableau I ci-après. Le taux de dilution x de la résine polysiloxane est également indiqué, x étant égal à mᵣ/(mᵣ + mₛ) où mᵣ est la masse de résine et mₛ la masse totale de solvants.

Après imprégnation des tissus C par les compositions consolidantes et séchage, une pré-réticulation de la résine précurseur de SiC a été réalisée en portant la température à 140°C environ pendant 2 h environ.

Après mise en forme de la préforme, la réticulation de la résine a été terminée en portant la température à 200°C environ pendant 20 h environ et la résine réticulée a été pyrolysée dans un four en portant la température à environ 900°C pendant 3 h environ.

Les préformes fibreuses consolidées par le résidu SiC de pyrolyse chargé par la poudre de B₄C ou SiC ont été examinées.

Le tableau I indique, pour les différentes compositions consolidantes utilisées, le taux de dilution, le taux volumique de résidu solide céramique, la nature et la granulométrie de la poudre céramique, le taux volumique de poudres, le rendement massique de pyrolyse (pourcentage en masse après pyrolyse par rapport à avant pyrolyse et après réticulation) et le niveau de consolidation obtenu. Le niveau de consolidation est évalué ainsi :
-1 : consolidation juste satisfaisante
0 : bonne consolidation
+1 : très bonne consolidation
+2 : préforme très rigide, consolidation effective mais pouvant être considérée comme excessive.

A titre comparatif, le rendement massique de pyrolyse et le niveau de consolidation obtenus par une consolidation voie liquide selon l'art antérieur sont indiqués à la première ligne du tableau, pour une préforme similaire obtenue à partir de même tissu C, la composition consolidante utilisée se distinguant des autres compositions en ce qu'elle ne comportait pas de charges solides et en ce que la quantité de résine précurseur de SiC introduite était telle que le taux volumique de résidu SiC de pyrolyse dans la préforme consolidée était de 12%.

| Taux dilution (mr/ (mr+ms)) | Taux volumique de résidu céramique (%) | Nature et granulométrie poudre | Taux volumique de poudre | Rendement pyrolyse | Niveau de consolidation |
|---|---|---|---|---|---|
| 6/10 | 12 | X | 0 | 80% | -1 |
| 2/10 | 4 | B₄C 150 nm | 1 | >80% | 0 |
| 2,5/10 | 5 | B₄C 150 nm | 0,5 | >80% | -1 |
| 2/10 | 4 | SiC 50 nm | 1 | >80% | +1 |
| 2,5/10 | 5 | SiC 50 nm | 0,5 | >80% | 0 |
| 3/10 | 6 | SiC 50 nm | 2 | >80% | +1 |
| 4/10 | 10 | B₄C 150 nm | 2 | >80% | +2 |
| 3/10 | 6 | B₄C 150 nm | 2 | >80% | +1 |
| 1,5/10 | 3 | B₄C 150 nm | 2 | >80% | 0 |

On note que le niveau de consolidation obtenu avec des compositions consolidantes selon l'invention est satisfaisant, à savoir permet la manipulation de la préforme sans déformation, y compris avec des compositions consolidantes donnant des taux volumiques de résidu SiC bien inférieurs à celui obtenu avec la composition selon l'art antérieur.

### Exemple 2

Une pièce en matériau CMC a été réalisée de la façon suivante.

Une texture fibreuse en fibres C a été obtenue par tissage 3D multicouches de fils en fibres C fournis par la société japonaise Tenax sous l'appellation "Fibres HTS mèchées NM5". Le tissu obtenu avait une épaisseur de 4,5 mm environ. Il a été traité thermiquement sous vide à une température d'environ 1 600°C pendant environ 30 mn.

Une première couche d'interphase en PyC ayant une épaisseur environ égale à 30 nm a été déposée par CVI sur les fibres de la texture fibreuse, en utilisant une phase gazeuse réactionnelle contenant du méthane.

Une composition consolidante a été réalisée contenant un précurseur de SiC, sous forme de résine polysiloxane fournie par la société allemande Wacker Chemie sous la référence "MK", et de la poudre de SiC de granulométrie moyenne de 50 nm environ, en procédant de la façon suivante :
- dispersion de la poudre de SiC dans un mélange d'un dispersant constitué de polyéthylène imine et d'un solvant de ce dispersant (éthanol),
- ajout d'un solvant de la résine polysiloxane, en l'espèce du MEC, et
- ajout de la résine polysiloxane avec un taux de dilution de 3/10.

Après mise en forme de la préforme, la réticulation de la résine a été effectuée en portant la température à 200°C environ pendant environ 20 h, et la résine réticulée a été pyrolysée dans un four en portant la température à environ 900°C pendant environ 3 h.

La préforme ainsi consolidée a été densifiée par une matrice céramique par CVI après formation d'une deuxième couche d'interphase en PyC d'épaisseur égale à 200 nm environ et obtenue par CVI.

Les étapes de pyrolyse et densification ont été enchaînées dans le même four.

La quantité et la constitution de la phase consolidante a été choisie pour laisser, après pyrolyse, une phase solide consolidante dans laquelle la céramique issue du précurseur polysiloxane occupe dans la préforme consolidée un volume représentant un taux volumique de 6% environ et la poudre SiC occupe un volume représentant un taux volumique de 2% environ.

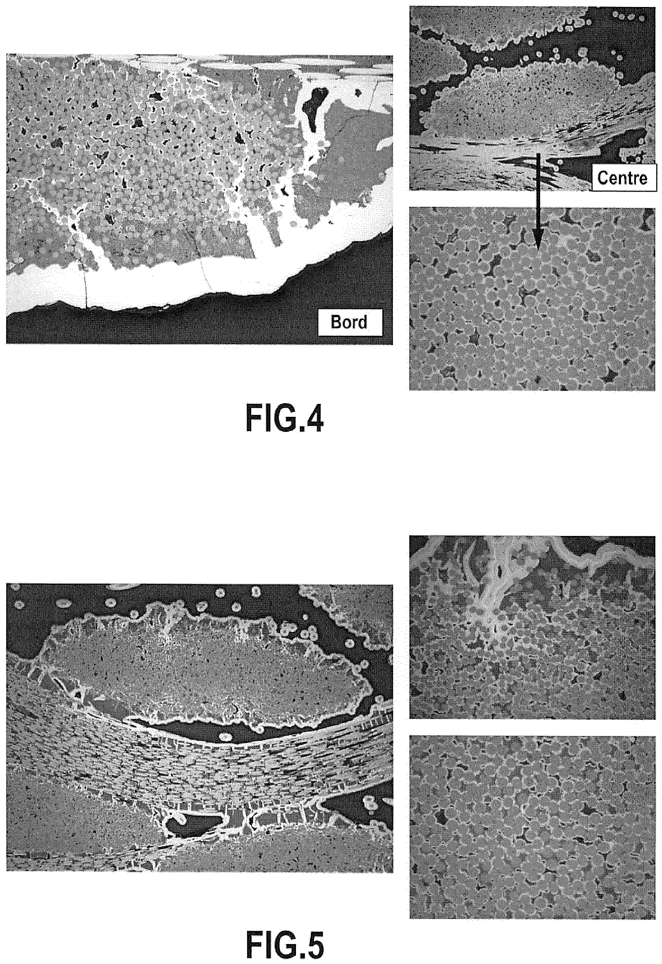

Des analyses morphologique ont été réalisées dans des zones situées en bord et au centre (coeur) du matériau. La figure 4 montre des clichés obtenus avec, pour la zone située au centre, deux clichés à des échelles différentes.

On constate que la phase consolidante (gris foncé) est absente à l'intérieur des fils, mais que la matrice céramique obtenue par CVI (couleur la plus claire) y est présente de façon significative. Les parties les plus sombres sont des porosités résiduelles.

### Exemple 3 (comparatif)

A tire de comparaison, on a procédé comme dans l'exemple 2 mais en utilisant une composition consolidante dépourvue de charges solides et telle qu'elle a laissé une phase solide consolidante occupant dans la préforme un volume représentant un taux volumique de 12%, comme dans l'art antérieur.

Des analyses morphologiques ont été réalisées dans des zones situées au centre (coeur) du matériau. La figure 5 montre des clichés obtenus à des échelles différentes.

On constate à l'intérieur des fils la présence de phase consolidante et une moindre présence de matrice céramique obtenue par CVI, en comparaison avec la figure 4.

## Revendications

1. Procédé de fabrication de pièce en matériau composite thermostructural, comprenant la réalisation d'une préforme fibreuse formée de fils ou câbles, la consolidation de la préforme fibreuse dans sa forme, et ensuite, la densification par infiltration chimique en phase gazeuse de la préforme fibreuse consolidée, la consolidation étant réalisée par imprégnation des fils ou câbles de la préforme fibreuse par une composition consolidante contenant un précurseur de carbone ou céramique et par transformation du précurseur en carbone ou céramique par pyrolyse,
**caractérisé en ce que** l'on utilise une composition consolidante qui contient en outre des charges solides réfractaires sous forme de poudre de granulométrie moyenne inférieure à 200 nanomètres et qui laisse, après pyrolyse, une phase solide consolidante dans laquelle le carbone ou la céramique issu du précurseur occupe un volume représentant entre 3% et 10% du volume apparent de la préforme et les charges solides occupent un volume représentant entre 0,5% et 5% du volume apparent de la préforme.

2. Procédé selon la revendication 1, **caractérisé en ce que** le taux volumique dans la préforme de carbone ou céramique de la phase consolidante issu du précurseur est compris entre 3% et 6%.

3. Procédé selon la revendication 1 ou 2, **caractérisé en ce que** le taux volumique dans la préforme des charges solides de la phase consolidante est compris entre 0,5% et 3%.

4. Procédé selon l'une quelconque des revendications 1 à 3, **caractérisé en ce que** les charges solides utilisées sont de granulométrie moyenne inférieure à 100 nanomètres.

5. Procédé selon l'une quelconque des revendications 1 à 4, **caractérisé en ce que** la préforme fibreuse est réalisée par conformation de texture fibreuse formée de fils ou câbles et imprégnée par la composition consolidante.

6. Procédé selon la revendication 5, **caractérisé en ce que** le précurseur de carbone ou céramique dans la composition consolidante est une résine et la conformation de la préforme fibreuse est réalisée après pré-réticulation de la résine.

7. Procédé selon l'une quelconque des revendications 1 à 6 pour la fabrication de pièce en matériau composite à matrice céramique, **caractérisé en ce que** les charges solides comprennent une poudre d'au moins un composé choisi parmi SiC, TiC, B₄C et BN.

8. Procédé selon l'une quelconque des revendications 1 à 7, **caractérisé en ce qu'**une couche d'interphase est formée par infiltration chimique en phase gazeuse sur les fibres des fils ou câbles avant imprégnation par la composition consolidante.

9. Procédé selon l'une quelconque des revendications 1 à 7, **caractérisé en ce qu'**une première couche d'interphase est formée par infiltration chimique en phase gazeuse sur les fibres des fils ou câbles avant imprégnation par la composition consolidante et une deuxième couche d'interphase est formée après consolidation de la préforme fibreuse et avant densification de la préforme fibreuse consolidée.

## Patentansprüche

1. Verfahren zur Herstellung eines Teils aus hochtemperaturbeständigem Verbundwerkstoff, umfassend die Herstellung eines aus Fäden oder Seilen gebildeten Faservorformlings, die Verfestigung des Faservorformlings in seiner Form sowie anschließend die Verdichtung mittels chemischer Gasphaseninfiltration des verfestigten Faservorformlings, wobei die Verfestigung durch Imprägnieren der Fäden oder Seile des Faservorformlings mit einer verfestigenden Zusammensetzung, die einen Kohlenstoff- oder Keramik-Precursor enthält, und durch Umwandeln des Precursors in Kohlenstoff oder Keramik mittels Pyrolyse vollzogen wird,
**dadurch gekennzeichnet, dass** eine verfestigende Zusammensetzung verwendet wird, die ferner feuerfeste feste Füllstoffe in Form von Pulver mit einer mittleren Korngröße von weniger als 200 Nanometern enthält und die nach der Pyrolyse eine verfestigende feste Phase übrig lässt, in welcher der Kohlenstoff oder die Keramik, der/die aus dem Precursor hervorgegangen ist, ein Volumen einnimmt, das zwischen 3 % und 10 % des scheinbaren Volumens des Vorformlings ausmacht, und die festen Füllstoffe ein Volumen einnehmen, das zwischen 0,5 % und 5 % des scheinbaren Volumens des Vorformlings ausmacht.

2. Verfahren nach Anspruch 1, **dadurch gekennzeichnet, dass** der Volumenanteil, in dem Vorformling, von Kohlenstoff oder Keramik der verfestigenden Phase, der/die aus dem Precursor hervorgegangen ist, zwischen 3 % und 6 % beträgt.

3. Verfahren nach Anspruch 1 oder 2, **dadurch gekennzeichnet, dass** der Volumenanteil, in dem Vorformling, der festen Füllstoffe der verfestigenden Phase zwischen 0,5 % und 3 % beträgt.

4. Verfahren nach einem der Ansprüche 1 bis 3, **dadurch gekennzeichnet, dass** die verwendeten festen Füllstoffe eine mittlere Korngröße von weniger als 100 Nanometern aufweisen.

5. Verfahren nach einem der Ansprüche 1 bis 4, **dadurch gekennzeichnet, dass** der Faservorformling durch Gestalten einer Faserstruktur, welche von Fäden oder Seilen gebildet und mit der verfestigenden Zusammensetzung imprägniert ist, hergestellt wird.

6. Verfahren nach Anspruch 5, **dadurch gekennzeichnet, dass** der Kohlenstoff- oder Keramik-Precursor in der verfestigenden Zusammensetzung ein Harz ist und die Gestaltung des Faservorformlings nach Vorvernetzung des Harzes vollzogen wird.

7. Verfahren nach einem der Ansprüche 1 bis 6, für die Herstellung eines Teils aus Keramikmatrix-Verbundwerkstoff, **dadurch gekennzeichnet, dass** die festen Füllstoffe ein Pulver aus wenigstens einer Verbindung, die aus SiC, TiC, B₄C und BN ausgewählt ist, umfassen.

8. Verfahren nach einem der Ansprüche 1 bis 7, **dadurch gekennzeichnet, dass** eine Zwischenphasen-Schicht durch chemische Gasphaseninfiltration auf den Fasern der Fäden oder Seile vor Imprägnieren mit der verfestigenden Zusammensetzung gebildet wird.

9. Verfahren nach einem der Ansprüche 1 bis 7, **dadurch gekennzeichnet, dass** eine erste Zwischenphasen-Schicht durch chemische Gasphaseninfiltration auf den Fasern der Fäden oder Seile vor Imprägnieren mit der verfestigenden Zusammensetzung gebildet wird und eine zweite Zwischenphasen-Schicht nach Verfestigen des Faservorformlings und vor Verdichten des verfestigten Faservorformlings gebildet wird.

## Claims

1. A method of fabricating a thermostructural composite material part, the method comprising making a fiber preform formed of yarns or tows, consolidating the fiber preform in its shape, and then densifying the consolidated fiber preform by chemical vapor infiltration, the consolidation being performed by impregnating the yarns or tows of the fiber preform with a consolidating composition containing a carbon- or ceramic-precursor and by transforming the carbon- or ceramic-precursor by pyrolysis, the method being **characterized in that** a consolidating composition is used that further contains refractory solid fillers in the form of a powder of mean grain size less than 200 nanometers and that leaves, after pyrolysis, a consolidating solid phase in which the carbon or ceramic derived from the precursor occupies a volume representing 3% to 10% of the apparent volume of the preform and the solid fillers occupy a volume representing 0.5% to 5% of the apparent volume of the preform.

2. A method according to claim 1, **characterized in that** the volume percentage in the preform of the carbon or ceramic of the consolidating phase derived from the precursor lies in the range 3% to 6%.

3. A method according to claim 1 or claim 2, **characterized in that** the volume percentage in the preform of the solid fillers of the consolidating phase lies in the range 0.5% to 3%.

4. A method according to any one of claims 1 to 3, **characterized in that** the solid fillers used present mean grain size of less than 100 nanometers.

5. A method according to any one of claims 1 to 4, **characterized in that** the fiber preform is made by conforming a fiber texture formed of yarns or tows and impregnated by the consolidating composition.

6. A method according to claim 5, **characterized in that** the carbon- or ceramic-precursor in the consolidating composition is a resin, and the fiber preform is conformed after pre-curing the resin.

7. A method according to any one of claims 1 to 6, for fabricating a part out of a ceramic matrix composite material, the method being **characterized in that** the solid fillers comprise a powder of at least one compound selected from SiC, TiC, B₄C, and BN.

8. A method according to any one of claims 1 to 7, **characterized in that** an interphase layer is formed by chemical vapor infiltration on the fibers of the yarns or tows prior to impregnation with the consolidating composition.

9. A method according to any one of claims 1 to 7, **characterized in that** a first interphase layer is formed by chemical vapor infiltration on the fibers of the yarns or tows prior to impregnation by the consolidating composition, and a second interphase layer is formed after consolidation of the fiber preform and prior to densification of the consolidated fiber preform.
